# EUROPÄISCHE PATENTSCHRIFT

(11) **EP 1 497 613 B1**
(45) Veröffentlichungstag und Bekanntmachung des Hinweises auf die Patenterteilung: **29.12.2010**
(21) Anmeldenummer: 03720517.6
(22) Anmeldetag: 23.04.2003
(51) Int. Cl.: G01B 11/25

(54) **VERFAHREN UND VORRICHTUNG ZUR BESTIMMUNG DER RÄUMLICHEN KOORDINATEN EINES GEGENSTANDES**
METHOD AND DEVICE FOR DETERMINING THE SPATIAL CO-ORDINATES OF AN OBJECT
PROCEDE ET DISPOSITIF POUR DETERMINER LES COORDONNEES SPATIALES D'UN OBJET

(30) Priorität: 24.04.2002 DE 10219054
(43) Veröffentlichungstag der Anmeldung: 19.01.2005
(73) Patentinhaber: Fraunhofer-Gesellschaft zur Förderung der angewandten Forschung e.V., 80686 München (DE)
(72) Erfinder: NOTNI, Gunther, 07749 Jena (DE); HEINZE, Mathias, 07749 Jena (DE); KÜHMSTEDT, Peter, 07747 Jena (DE)
(74) Vertreter: Pfenning, Meinig & Partner GbR
(86) Internationale Anmeldenummer: PCT/EP2003/004210
(87) Internationale Veröffentlichungsnummer: WO 2003/091660

(56) Entgegenhaltungen:
- DE-A- 10 025 741

## Beschreibung

Die Erfindung betrifft ein Verfahren zur Bestimmung der räumlichen Koordinaten eines Gegenstandes nach dem Oberbegriff des Hauptanspruchs sowie eine Vorrichtung zur Durchführung des Verfahrens.

Zur berührungslosen flächenhaften Erfassung von Oberflächenformen, Oberflächengeometrien oder Koordinaten ausgewählter Punkte werden verschiedene optische Prinzipien eingesetzt. Allen Verfahren ist dabei gemeinsam, daß die Bestimmung der 3-D-Koordinaten eines Oberflächenmeßpunktes nur dann möglich ist, wenn mindestens drei unabhängige Meßwerte für diesen Punkt vorliegen. Zusätzlich gehen Annahmen über die Geometrie des Meßsystems in das Ergebnis ein.

Ein Verfahren ist die klassische Streifenprojektionstechnik, die mit einer oder mehreren CCD-Kameras und einem Projektor realisiert wird. (DE 41 20 115 C2, DE 41 15 445 A1. In derartigen Vorrichtungen werden die Gitterlinien oder Gray-Code-Sequenzen auf die zu vermessende Oberfläche projiziert. Eine CCD-Kamera registriert an jedem ihrer Empfängerelemente die Intensität eines Bildpunktes auf der Oberfläche. Mit bekannten mathematischen Algorithmen werden aus den Intensitätsmeßwerten Phasenmeßwerte berechnet. Die gesuchten Objektkoordinaten können nachfolgend aus den Phasenmeßwerten und den Bildkoordinaten der Meßpunkte in der Bildebene des Aufnahmesystems berechnet werden. Voraussetzung dafür ist allerdings die Kenntnis der Geometrie des Meßsystems (Orientierungsparameter von Projektor und Kamera) sowie der Abbildungseigenschaften der Projektions- und Abbildungsoptik.

Die Anzahl der zu bestimmenden Orientierungsparameter läßt sich erheblich einschränken, wenn ausschließlich die Phasenmeßwerte zur Koordinatenberechnung verwendet werden. In solchen Systemen bestimmt die Lage eines einzelnen Empfängerelementes im Aufnahmesystem ausschließlich den Meßort, wird aber als Meßinformation nicht ausgewertet. Durch Beleuchtung der Szene aus mehreren, aber mindestens drei Projektionsrichtungen mit Gitterlinien oder auch Gray-Code-Sequenzen und Beobachtung mit einer oder mehreren in Bezug zum Objekt fest positionierten Kameras, lassen sich beispielsweise Koordinaten bei bekannter Geometrie des Beleuchtungssystems berechnen. In allen diesen Systemen müssen die Systemparameter (Orientierungsparameter) separat erfaßt werden, wobei dies typischerweise durch eine sogenannte Vorabkalibrierung des Systems geschieht. Dabei werden Kalibrierkörper mit bekannter Geometrie vermessen, mit Hilfe derer die Geometrieparameter des Meßaufbaus modelliert werden (DE 195 36 297 A1). Unbrauchbar ist diese Vorgehensweise immer dann, wenn Geometrieparameter in weiteren Messungen nicht konstant gehalten werden können, beispielsweise durch Temperatureinflüsse oder in Folge mechanischer Beanspruchung des Systems oder wenn bedingt durch die Komplexität der Meßaufgabe eine variable Sensoranordnung gefordert wird und daher eine Vermessung mit vorab festgelegter Anordnung nicht in Frage kommt.

Photogrammetrische Meßverfahren überwinden die Schwierigkeit einer separaten Einmeßprozedur. Als Meßinformationen dienen hier die Bildkoordinaten, also die Lage der Meßpunkte im Raster des Aufnahmesystems. Aus mindestens zwei unterschiedlichen Kamerapositionen müssen für einen Objektpunkt die Bildkoordinaten bekannt sein. Vorteilhaft bei diesen Messverfahren ist dabei, daß pro Meßpunkt ein überzähliger Meßwert gewonnen werden kann, d.h. bei zwei Kamerapositionen liegt ein Meßwert mehr vor, als für die Berechnung der drei Koordinaten eines Punktes erforderlich ist. Auf diese Weise ist es bei hinreichend vielen Meßpunkten möglich, simultan Koordinaten, innere und äußere Orientierungsparameter der Kameras sowie Korrekturparameter für die Verzeichnung zu berechnen. Schwierigkeiten ergeben sich jedoch bei dem Auffinden der dazu notwendigen homologen Punkten, vor allem für sehr viele Meßpunkte. Hierzu müssen in aufwendigen Bildverarbeitungsprozeduren Texturen oder Oberflächenstrukturierungen aus verschiedenen Aufnahmen in Verhältnisse gesetzt werden (DE 195 36 296 A1). Gerade für eine vollständige flächenhafte Erfassung einer Objektoberfläche ist dies nicht mit vertretbarem Aufwand möglich. Auch sind Markierungen als Verknüpfungspunkte für das Zusammenfügen der Teilansichten erforderlich.

In der DE 196 37 682 A1 wird ein System vorgeschlagen, welches diese Probleme überwindet. Dabei beleuchtet ein Projektionssystem die Szene mit einer Serie von Streifenbildern, bestehend aus zwei zueinander um 90° verdrehten Sequenzen. Solche aus zwei unterschiedlichen Positionen auf das Objekt projizierte Streifenbilder ermöglichen bei gleichzeitiger Beobachtung mit einer fest positionierten Kamera, eine Auswertung gemäß dem funktionalen Modell der Photogrammetrie. Nachteile dieses Systemkonzeptes ergeben sich vor allem bei der vollständigen Vermessung von komplexen Objekten. Mit der Komplexität des Meßobjektes steigt auch die Anzahl der notwendigen Ansichten. Es ist aber nicht sinnvoll, die Anzahl der Kameras zu erhöhen, da eine Meßinformation nur an einem Objektpunkt vorliegt, der sowohl aus zwei unterschiedlichen Richtungen beleuchtet wird, als auch von der Kamera beobachtet wird. Das Justieren des Meßsystems, d.h. das Einrichten der erforderlichen Kameras gestaltet sich darüber hinaus um so schwieriger, je mehr Ansichten eingerichtet werden müssen. Für komplexe Meßaufgaben ist ein solches vorausschauendes Einrichten des Sensorsystems nicht immer befriedigend möglich. Nachteilig bei bekannten Verfahren ist außerdem, daß das Ergebnis der Messung für eine Bewertung immer erst am Ende des kompletten Meßprozesses zur Verfügung steht. Eine Zwischenauswertung und darauf aufbauend eine angepaßte Positionierung des Projektors und der Kamera(s) ist dabei nicht möglich.

Aus der DE 100 25 741 A1 ist ein Verfahren zur Bestimmung der räumlichen Koordinaten von Gegenständen und/oder deren zeitlicher Änderung bekannt, bei dem der Gegenstand jeweils aus mindestens zwei Richtungen mit einer Serie von Lichtmustern beleuchtet wird, die mit einer zweidimensional auflösenden Sensoranordnung aufgezeichnet werden und zwar zur Erfassung unterschiedlicher Ansichten bei unterschiedlichen Positionen der Sensoranordnung. Dabei wird bei einer neuen Position der Sensoranordnung mindestens eine Projektionsrichtung so gewählt, daß sie mit einer Projektionsrichtung der vorhergehenden Position der Sensoranordnung übereinstimmt. Bei diesen beiden Projektionsrichtungen sind die Phasenmeßwerte identisch und daraus kann eine Verknüpfungsvorschrift zwischen den Aufzeichnungspunkten der Sensoranordnung bei der neuen und der vorhergehenden Position bestimmt werden. Dieses System ist selbsteinmessend, d.h. es müssen vor einer Messung keinerlei geometrische oder optische Systemgrößen bekannt sein oder vorher kalibriert werden. Die Kalibrierung geschieht bei diesem bekannten Verfahren während des Messens, d.h. die Kalibrierkamera ist gleichzeitig die Meßkamera. Dieses Verfahren ist beispielsweise bei komplexen Objekten nicht zufriedenstellend, da Abschattungen nicht zu vermeiden sind.

Der Erfindung liegt die Aufgabe zugrunde, ein Verfahren zur Bestimmung der räumlichen Koordinaten eines Gegenstandes zu schaffen, mit der eine Vermessung von komplexen Gegenständen ohne Markierungen oder Texturen, ohne das Auffinden von homologen Punkten und ohne daß geometrische oder optische Systemgrößen bekannt sein oder vorher kalibriert werden müssen, möglich ist, wobei die Anzahl der möglichen Aufnahmerichtungen nicht durch die Anzahl der Kameras begrenzt ist und wobei die Meßzeit verringert werden kann.

Diese Aufgabe wird erfindungsgemäß durch die Merkmale des Hauptanspruchs gelöst.

Dadurch, daß die aus den mindestens zwei Richtungen auf den Gegenstand projizierten Lichtmuster nicht nur jeweils von einer zugeordneten ersten Aufzeichnungsvorrichtung sondern zusätzlich von mindestens einer zweiten Aufzeichnungsvorrichtung punktweise als Bild erfaßt werden, wobei die mindestens eine zweite Aufzeichnungsvorrichtung ortsfest in Bezug auf den zu vermessenden Gegenstand verbleibt und nicht wie die Projektionsvorrichtung und die erste Aufzeichnungsvorrichtung versetzt wird und daß aus den mit der zweiten Aufzeichnungsvorrichtung aufgezeichneten Punkten der projizierten Lichtmuster mindestens vier Phasenmeßwerte bestimmt werden, aus denen die Parameter der Projektionsvorrichtung für alle Richtungen der Projektion bestimmt werden, ist es möglich, eine Kalibrierung des Systems in getrennter Weise zum Messen vorzunehmen. Der Gegenstand kann aus einer beliebigen Anzahl von Richtungen aufgrund der frei beweglichen Sensoranordnung, bestehend aus Projektionsvorrichtung und erster Aufzeichnungsvorrichtung erfaßt werden. Die für die Kalibrierung notwendigen Daten werden während der Meßwertaufnahme erfaßt, wobei eine Trennung zwischen stationärer Kalibrierkamera und beweglicher Meßkamera realisiert wird. Dies erhöht die Flexibilität der Meßanordnung im Sinne eines mobilen Sensors. Die Anzahl der zu digitalisierenden Objektansichten ist prinzipiell frei und nicht auf die Anzahl der verwendeten Kameras beschränkt, sondern kann größer gewählt werden. Durch die Selbstkalibrierung kann die messende Sensoranordnung während des Meßablaufs mechanischen Änderungen unterliegen, ohne daß diese das Meßergebnis beeinflussen.

Da für die Bestimmung der geometrischen Kenngrößen der Projektionsvorrichtung vier Phasenmeßwerte, für die der ersten Aufzeichnungsvorrichtung nur zwei Phasenmeßwerte und für die Berechnung der dreidimensionalen Koordinaten nur ein Phasenmeßwert notwendig sind, kann die Meßzeit erheblich verkürzt werden.

Durch die in den Unteransprüchen angegebenen Maßnahmen sind vorteilhafte Weiterbildungen und Verbesserungen möglich.

Insgesamt können mit dem erfindungsgemäße Verfahren komplexe Gegenstände vermessen werden. Es werden keine objektfesten oder speziell projizierte Paßmarken oder auch besondere Objekteigenschaften für das Auffinden der homologen Punkte zur Bildmontage benötigt. Aufwendige Matching-Prozeduren entfallen deswegen vollständig. Demgegenüber stehen über das Pixelraster der stationären Kalibrierkamera(s) freie virtuelle Marken zur Verfügung. Eine Objektinteraktion wird somit vermieden. Es können technisch sehr einfache automatische Meßsysteme aufgebaut werden. Trotzdem sind diese in der Lage komplexe Objekte vollständig und flächenhaft zu erfassen. Für die Standortänderung der Sensoranordnung sind keine teuren, genauen Führungsmittel bzw. Handling-Systeme notwendig. Für die Zuordnung von Teilbereichen zum gesamten dreidimensionalen Bild ist keine Überlappung der mit der Sensoranordnung jeweils erfaßten Teilbereiche notwendig.

Die Erfindung ist in der Zeichnung dargestellt und wird in der nachfolgenden Beschreibung näher erläutert. Es zeigen:
- Fig. 1: eine schematische Darstellung des Meßablaufs entsprechend dem erfindungsgemäßen Verfahren,
- Fig. 2: ein erstes Ausführungsbeispiel einer bei dem erfindungsgemäßen Verfahren verwendeten Meß- vorrichtung,
- Fig. 3: ein zweites Ausführungsbeispiel einer Vor- richtung zur Durchführung des erfindungsgemä- ßen Verfahrens,
- Fig. 4: ein drittes Ausführungsbeispiel einer Meßvor- richtung zur Durchführung des erfindungsgemä- ßen Verfahrens,
- Fig. 5: ein viertes Ausführungsbeispiel einer Meßvor- richtung zur Durchführung des erfindungsgemä- ßen Verfahrens,
- Fig. 6: ein fünftes Ausführungsbeispiel einer Meßvor- richtung zur Durchführung des erfindungsgemä- ßen Verfahrens, und
- Fig. 7: ein sechstes Ausführungsbeispiel einer Meß- vorrichtung zur Durchführung des erfindungs- gemäßen Verfahrens.

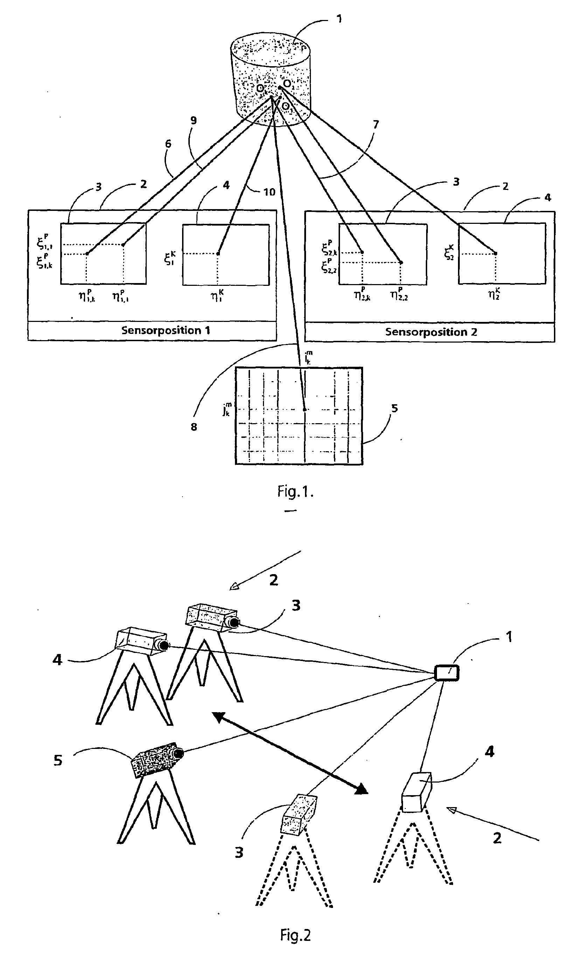

Das erfindungsgemäße Verfahren wird im Folgenden unter Heranziehung der Fign. 1, 2 und 3 beschrieben. Der zu vermessende Gegenstand 1 bzw. das Objekt ist beispielsweise auf einem Meßtisch befestigt und wird von einem einen Bestandteil einer Sensoranordnung 2 bildenden Projektor 3 auf einem Stativ beleuchtet. Eine gleichfalls Bestandteil der Sensoranordnung 2 bildende Kamera 4 nimmt das Bild des beleuchteten Objektes 1 bzw. des Objektbereichs auf. Im Ausführungsbeispiel ist die als Kamera ausgebildete Aufzeichnungsvorrichtung eine CCD-Kamera auf einem Stativ.

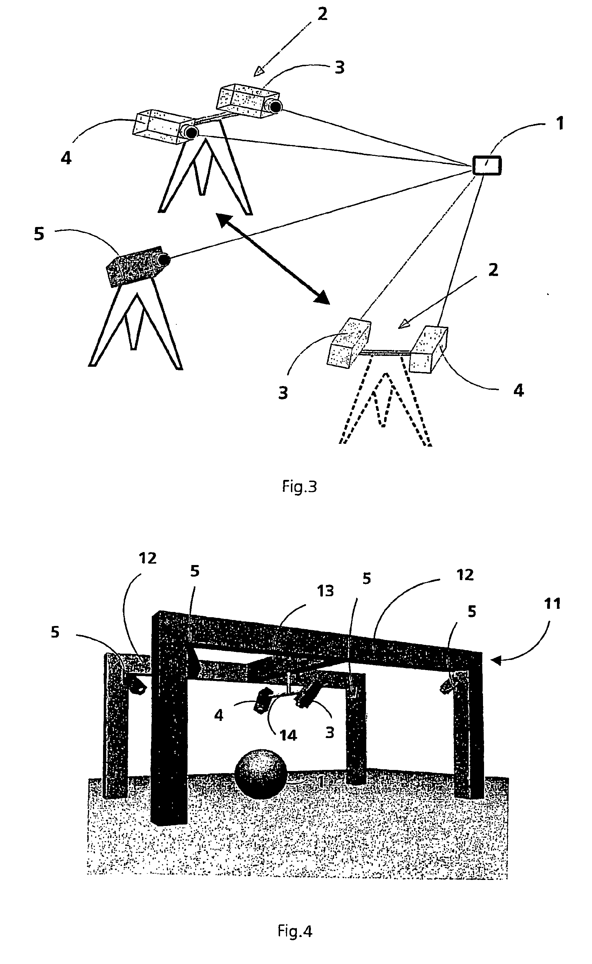

In der Fig. 2 sind der Projektor 3 und die Kamera 4 voneinander unabhängig, während in Fig. 3 Projektor 3 und Kamera 4 auf einem Stativ miteinander starr verbunden sind, was zu einer Vereinfachung der Meßwertaufnahme führt. Die Fign. 2 und 3 zeigen die Sensoranordnung 2 in zwei verschiedenen Positionen, wobei die Position 1 mit durchgezogenen Linien dargestellt ist und die Position 2 mit gestrichelten Linien ausgeführt ist.

Der Projektor 3 projiziert auf das zu vermessende Objekt 1 oder einen Objektbereich Lichtmuster, die als Liniengitter und/oder Gray-Code-Sequenzen ausgebildet sind. Die Kamera 4 registriert an jedem ihrer Empfängerelemente die Intensität der auf dem Objekt 1 abgebildeten Streifenbilder als Meßwerte. Anschließend wird das Gitter und/oder die Gray-Code-Sequenz um 90° gedreht und erneut auf den Gegenstand 1 projiziert, wobei die Drehachse parallel zur optischen Achse des Projektionssystems liegt.

Weiterhin ist eine sogenannte Kalibrierkamera 5 vorgesehen, die gleichfalls als CCD-Kamera ausgebildet ist und Bilder des Objekts 1 bzw. eines Objektbereichs aufnimmt. Anstelle der Kalibrierkamera können auch Photodetektoren vorgesehen sein und da nur eine begrenzte Anzahl von Meßpunkten aufgenommen werden muß, müssen als Mindestanzahl nur drei Photodetektoren verwendet werden.

In Fig. 1 sind die prinzipiellen Beziehungen beim Meßablauf dargestellt. Von der Sensorposition 1, die in den Fign. 2 und 3 mit durchgezogenen Linien gekennzeichnet ist, werden, wie oben ausgeführt, Lichtmuster mittels des Projektors 3 derart auf das Objekt 1 projiziert, daß zwei um einen Winkel (im Optimum um 90°) zueinander verdrehten Phasenfelder erhalten werden, wodurch jeder Meßpunkt auf dem Objekt 1 mit zwei Phasenwerten signalisiert wird. Der Projektor 3 projiziert beispielsweise auf das zu vermessende Objekt 1 oder einen Objektbereich eine Serie von zwei Struktursequenzen von phasenverschobenen Gitterlinien und/oder Gray-Code-Sequenzen, wobei die beiden Sequenzen die Verdrehung gegeneinander um 90° aufweisen. Ebenso wie die Meßkamera 4 nimmt die Kalibrierkamera 5 an jedem ihrer Empfängerelemente die Intensitätsmeßwerte der Einzelbilder der Sequenzen auf.

Mit bekannten Algorithmen der Streifenbildauswertung lassen sich aus den mit der Meßkamera 4 und der Kalibrierkamera 5 aufgezeichneten Bildern Phasenmeßwerte, die den Koordinaten in der Gitterebene des Projektionssystems entsprechen, an jedem Kamerapixelpunkt sowohl für die Meßkamera 4 als auch für die Kalibrierkamera 5 berechnet, wobei durch die gewählte Art der Streifenprojektion, z.B. verdrehte Gittersequenzen an dem beobachteten Punkt des Gegenstandes 1 bis zu zwei Phasenmeßwerte pro Beleuchtungsrichtung gewonnen werden.

Im nachfolgenden Schritt wird die Sensoranordnung 2 von der Sensorposition 1 in eine beliebige andere Position versetzt, wobei diese Position 2 in Fig. 2 und Fig. 3 durch die gestrichelten Linien dargestellt ist. Dabei bleibt der Standpunkt der Kalibrierkamera 5 relativ zum Gegenstand 1 unverändert. Von dieser neuen Position der Sensoranordnung 2 werden von dem Projektor 3 weitere Struktursequenzen bzw. Gitterlinien in gleicher Weise, wie oben aufgeführt, auf das Objekt 1 bzw. den Objektbereich projiziert, wobei wiederum sowohl die Meßkamera 4 als auch die Kalibrierkamera 5 die Bildsequenzen bzw. Teile davon simultan aufnehmen.

Dieser Vorgang des Umsetzens der Sensoranordnung 2 in weitere Positionen kann solange wiederholt werden, bis jeder zu vermessende Bereich des Gegenstandes mindestens einmal von der Sensoranordnung 2 erfaßt, d.h. von dem Projektor 3 ausgeleuchtet und gleichzeitig mit der Meßkamera 4 beobachtet worden ist. Dabei kann die Meßwertaufnahme an den verschiedenen Positionen aufeinander folgend und anschließen die notwendigen Berechnungen durchgeführt werden. Es können jedoch auch Berechnungen nach jeder neuen Position vorgenommen werden.

Die Sensoranordnung 2 und die Kalibrierkamera 5 sind mit einer Auswerteeinrichtung verbunden, in der die notwendigen mathematischen Berechnungen für die Bestimmung der dreidimensionalen Koordinaten des Gegenstandes durchgeführt werden. Dazu ist für die Auswertung der Phaseninformation erforderlich, daß die Geometrieparameter des Projektionssystems bekannt sind. Die Raumlage der einzelnen Projektorpositionen wird durch sechs äußere Orientierungsparameter (drei Koordinaten der Projektionszentren, drei Euler'sche Drehwinkel um die mitgedrehten Koordinatenachsen) festgelegt. Zur Berechnung dieser Geometriegrößen wird mit funktionalen Modellen der Programmetrie ein Gleichungssystem aufgestellt. Als Eingangsgrößen dienen die vier gemessenen bzw. aus den Meßwerten berechneten Phasenwerte. Auch die Raumlage der Meßkamera 4, die gleichfalls durch Orientierungsparameter bestimmt ist, wird über die Auswerteeinrichtung ermittelt. Dabei werden die Kenntnisse über die Projektionsvorrichtung sowie zwei Phasenmeßwerte verwendet.

Der Auswerteprozeß soll unter Heranziehung der Fig. 1 im Folgenden erläutert werden. Wie schon ausgeführt wurde, ist die Grundbedingung für die Datenauswertung, daß der Projektor 3 die von der stationären Kalibrierkamera 5 eingesehenen Bereiche des Gegenstandes 1 aus mindestens zwei Positionen signalisiert. Weiterhin muß beachtet werden, daß die Intensitätsmeßwerte für alle Beleuchtungspositionen von der Kalibrierkamera 5 immer an dem gleichen Objektpunkt O_{κ} auf der Oberfläche des Gegenstandes 1 registriert werden, d.h. es darf keine Relativbewegung zwischen Gegenstand 1 und der Kalibrierkamera 5 stattfinden. In Fig. 1 wird dieses Bedingung anhand der Strahlen 6, 7, 8 dargestellt, die alle auf den Objektpunkt O_{κ} treffen. Die mitbewegte Meßkamera 4 hingegen erfaßt für jede Position 1 (1 = 1...n) unterschiedliche Bereiche O₁. Zur Vereinfachung ist in der schematischen Darstellung der Fig. 1 aus diesen Objektbereichen immer nur ein Punkt O₁ bzw. O₂ gezeichnet.

Die Auswertung des Meßvorganges zur Bestimmung der 3-D-Koordinaten der Oberfläche des Gegenstandes 1 ist ein dreistufiger Prozeß. Dabei werden prinzipiell erst alle Projektorpositionen berechnet, d.h. kalibriert, dann werden alle Meßkamerapositionen und abschließend die 3-D-Koordinaten der von den Positionen der Sensoranordnung 2 erfaßten Koordinaten des Gegenstandes berechnet. Dies geschieht, wie oben ausgeführt, nach der gesamten Meßwertaufnahme oder zwischen der Meßwertaufnahme an unterschiedlichen Positionen.

### Erster Auswerteschritt:

In einem ersten Auswerteschritt werden unter Verwendung der mit der stationären Kalibrierkamera 5 an den Bildelementen (i^{m}k, j^{m}k) aufgenommenen Projektorbildkoordinaten (ξ^{P}_{l,k,} η^{P}_{l,k}), d.h. Phasenmeßwerten, die den Objektpunkt O_{κ} beschreiben, die äußeren und inneren Orientierungsparameter für alle Projektorpositionen 1 mittels bekannter Methoden des Bündelblockausgleichs berechnet. Grundbedingung hierfür ist, wie oben ausgeführt, daß für die stationäre Kamera mindestens vier Phasenbilder zur Verfügung stehen, die bei Projektion aus mindestens zwei unterschiedlichen Projektpositionen 1 generiert wurden. Für jede Projektorposition werden somit die sechs äußeren Orientierungsparameter berechnet, die als Geometrieparameter der Projektoren dienen und die Raumlage der einzelnen Projektorpositionen beschreiben. Diese Berechnung kann als Kalibrierung verstanden werden. Die Kalibrierkamera als Übersichtskamera dient somit zum Registrieren der homologen Punkte bzw. ihre Pixel als "virtuelle homologe Punkte".

Bisher wurde nur von einer Kalibrierkamera 5 gesprochen. Es können jedoch eine Mehrzahl von Kalibrierkameras 5 vorgesehen sein, die in fester Beziehung zu dem Objektpunkt stehen, wobei die Anzahl der Kameras mit m (m ≥ 1) bezeichnet ist. Diese Kalibrierkameras 5 sind in unterschiedlichen Beobachtungspositionen angeordnet und es kann somit ein größerer Objektbereich erfaßt werden, d.h. kompliziertere Gegenstände ausgemessen werden.

### Zweiter Auswerteschritt:

In der Position 1 der Sensoranordnung 2 nimmt die Kamera 4 mit ihrem Raster aus Empfängerelementen den Gegenstand 1 auf, wobei hier ein Punkt O₁ aus dem Bereich herausgegriffen ist, der über die Strahlen 9 und 10 gekennzeichnet ist. An dem Pixelpunkt (ξ^{κ}₁, η^{κ}₁) der Kamera 4 werden zwei Meßinformationen (ξ^{P}_{1,1}, η^{P}_{1,1}) in Form von Phasenmeßwerten gewonnen, die den Projektorbildkoordinaten in der Gitterebene entsprechen. Aus diesen Informationen und den im ersten Auswerteschritt berechneten Orientierungsparametern des Projektors 3 an der Position 1 werden die Orientierungsparameter der Meßkamera 4 an der Position 1 über einen freien Bündelausgleich berechnet, d.h. die Meßkamera wird bezüglich ihrer Position kalibriert. Dabei wird nicht nur ein Punkt O₁ aus dem erfaßten Objektbereich verwendet, sondern es können bis zu (i x j) Punkte verwendet werden, wobei i x j die Pixelzahl der Meßkamera 4 in Zeilen- und Spaltenrichtung ist.

Hiernach stehen die notwendigen die Sensoranordnung 2 an der Position 1 beschreibenden Orientierungsparameter zur Verfügung, wobei mit dem ersten Auswerteschritt der Projektor 3 und mit dem zweiten Auswerteschritt die Kamera 4 an dieser Position kalibriert wurden.

### Dritter Auswerteschritt:

Unter Verwendung der Orientierungsparameter des Projektors 3 und der Kamera 4 an der Position 1 werden durch klassische Triangulation aus den Phasenbildern die dreidimensionalen Koordinaten des Punktes O₁ und entsprechend aller von der Kamera 4 sichtbaren Objektpunkte (i x j) in dieser Position 1 bzw. Ansicht 1 berechnet werden. Da der Objektpunkt durch zwei Gittersequenzen signalisiert wurde und somit zwei Phasenbilder zur Verfügung stehen, jedoch nur ein Phasenmeßwert notwendig ist, besteht prinzipiell die Möglichkeit, jeden Punkt zweimal zu berechnen und über eine Mittelung zu verrechnen, wodurch die Koordinatenmeßgenauigkeit erhöht wird.

Die Auswerteschritte zwei und drei werden für die Position 2 der Sensoranordnung 2 und nachfolgend schrittweise für alle folgenden Positionen durchgeführt. Im Ergebnis wird eine 3-D-Punktewolke des Gegenstandes mit der Meßkamera 4 aus 1 Beobachtungspositionen und, wenn eine Mehrzahl von Kalibrierkameras 5 vorhanden ist, zusätzlich aus m Beobachtungspositionen gewonnen.

In den Fign. 4 bis 7 sind weitere Möglichkeiten einer Vorrichtung zur Durchführung des Verfahrens dargestellt. In Fig. 4 sind eine Mehrzahl von Kalibrierkameras 5 an einem Gestell 11 befestigt, unter dem das Objekt 1 angeordnet ist und das aus zwei portalartigen parallel angeordneten Trägerelementen 12 und einem die Trägerelemente 12 verbindenden Querbalken 13 besteht. An dem Querbalken 13 ist die Sensoranordnung 2 an einem in allen Raumrichtungen drehbaren Drehteil 14 befestigt, wobei auch die Kamera und/oder der Projektor 3 in ihrem Winkel zur Vertikalen verändert werden können.

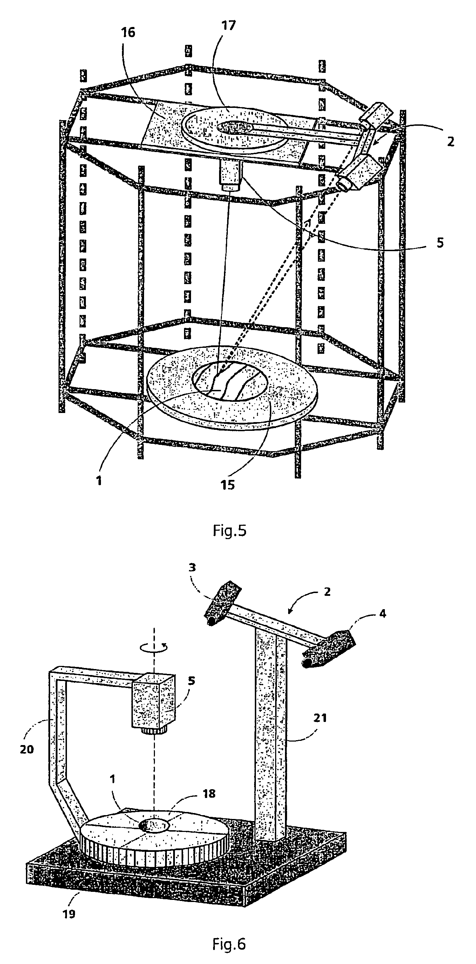

In Fig. 5 ist der Gegenstand 1 auf einem Meßtisch 15 angeordnet und eine Kalibrierkamera 5 ist oberhalb des Objektes fest an einem Gestell 16 befestigt. Die Sensoranordnung 2 ist wiederum an einer Dreheinheit 17 befestigt, in deren Drehachse sich der Meßtisch 16 befindet. Die Sensoranordnung dreht sich somit in einem Winkel zur Vertikalen um den Gegenstand 1 herum.

In Fig. 6 ist der Meßtisch in Form eines Drehtisches 18 ausgebildet, der zu einer Basis 19 drehbar ist. An dem Drehtisch ist über einen Arm 20 die Kalibrierkamera 5 derart befestigt, daß sie über dem Gegenstand 1 steht. Meßkamera 4 und Projektor 3 der Sensoranordnung 2 sind an einem Balken 21 befestigt, der starr mit der Basis 19 verbunden ist.

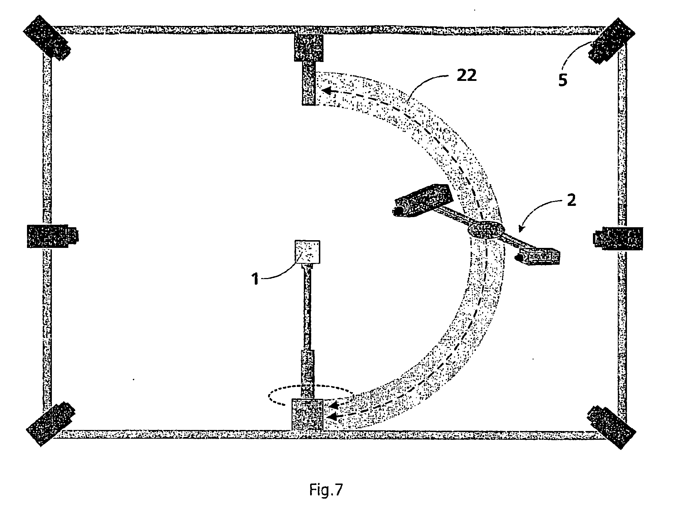

Schließlich ist in Fig. 7 eine weitere Vorrichtung zur Durchführung des Verfahrens dargestellt. Dabei ist die Sensoranordnung 2 an einer um das Objekt 1 drehbaren kreisförmigen Führungsbahn 22 derart befestigt, daß sie sich auf der Führungsbahn auf dem Halbkreis bewegen kann und frei positionierbar ist, wobei die Führungsbahn 22 um das Objekt 1 um einen Winkel von bis zu 360° frei drehbar ist. An einem die Führungsbahn umgebenden Gestell 23 sind eine Mehrzahl von Kalibrierkameras 5 befestigt. Es kann somit sowohl die Ober- als auch die Unterseite des Gegenstandes 1 erfaßt werden.

## Patentansprüche

1. Verfahren zur Bestimmung der räumlichen Koordinaten eines Gegenstandes, bei dem der Gegenstand mit einer Projektionsvorrichtung aus mindestens zwei Richtungen mit Lichtmustern beleuchtet wird, und die projizierten Lichtmuster auf dem Gegenstand mit einer zweidimensional auflösenden ersten Aufzeichnungsvorrichtung punktweise aufgezeichnet werden, wobei für die jeweiligen aufgezeichneten Punkte der Oberfläche des Gegenstandes Phasenwerte bestimmt und diese zur Berechnung von geometrischen Kenngrößen und räumlichen Koordinaten der Punkte verwendet werden, **dadurch gekennzeichnet, daß** die aus den mindestens zwei Richtungen auf den Gegenstand projizierten Lichtmuster oder Teile davon zusätzlich von mindestens einer zweiten Aufzeichnungsvorrichtung punktweise aufgezeichnet werden, wobei die mindestens eine zweite Aufzeichnungsanordnung ortsfest in Bezug auf den zu vermessenden Gegenstand verbleibt und daß aus den mit der zweiten Aufzeichnungsvorrichtung aufgezeichneten Punkte der projizierten Lichtmuster mindestens vier Phasenmeßwerte bestimmt werden, aus denen die geometrischen Kenngrößen der Projektionsvorrichtung für die mindestens zwei Richtungen der Projektion berechnet werden.

2. Verfahren nach Anspruch 1, **dadurch gekennzeichnet, daß** nach der Bestimmung der geometrischen Kenngrößen der Projektionsvorrichtung die geometrischen Kenngrößen der ersten Aufzeichnungsvorrichtung unter Verwendung der geometrischen Kenngrößen der Projektionsvorrichtung bei der jeweiligen Projektionsrichturig und von mindestens zwei Phasenmeßwerten berechnet worden, die aus den mit der ersten Aufzeichnungsvorrichtung aufgezeichneten, aus der jeweiligen Richtung projizierten Lichtmustern bestimmt werden.

3. Verfahren nach Anspruch 1 oder 2, **dadurch gekennzeichnet, daß** unter Verwendung der vorher bestimmten geometrischen Kenngrößen der Projektionsvorrichtung und der ersten Aufzeichnungsvorrichtung und mindestens einem Phasenmeßwert, der aus den mit der ersten Aufzeichnungsvorrichtung aufgezeichneten, aus der jeweiligen Richtung projizierten Lichtmustern bestimmt wird, die dreidimensionalen Koordinaten der jeweiligen Punkte des Gegenstandes berechnet werden.

4. Verfahren nach einem der Ansprüche 1 bis 3, **dadurch gekennzeichnet, daß** nach der Projektion der Lichtmuster aus einer ersten Richtung und Aufzeichnung der Ansicht des Gegenstandes aus einer ersten Richtung die Projektionsvorrichtung und die erste Aufzeichnungsvorrichtung für die Projektion aus einer zweiten Richtung und Aufzeichnung einer anderen Ansicht des Gegenstandes aus einer zweiten Richtung von einer ersten Position in eine zweite Position umgesetzt werden.

5. Verfahren nach einem der Ansprüche 1 bis 4, **dadurch gekennzeichnet, daß** zur Messung von unterschiedlichen Ansichten des Gegenstandes die Projektionsvorrichtung und die erste Aufzeichnungsvorrichtung gemeinsam in unterschiedliche Positionen umgesetzt werden.

6. Verfahren nach einem der Ansprüche 1 bis 5, **dadurch gekennzeichnet, daß** die geometrischen Kenngrößen der Projektionsvorrichtung und der ersten Aufzeichnungsvorrichtung Orientierungsparameter sind.

7. Verfahren nach Anspruch 3, **dadurch gekennzeichnet, daß** zwei Phasenmeßwerte verwendet werden und jede räumliche Koordinate zweimal berechnet wird und eine Mittelung durchgeführt wird.

8. Verfahren nach einem der Ansprüche 1 bis 7, **dadurch gekennzeichnet, daß** der Gegenstand aus jeder Projektionsrichtung in einem ersten Schritt mit einem Liniengitter und/oder Gray-Code-Sequenzen und in einem zweiten Schritt mit dem um 90° bezüglich der Projektionsrichtung verdrehten Liniengitter und/oder den um 90° verdrehten Gray-Code-Sequenzen beleuchtet wird.

9. Vorrichtung zur Durchführung des Verfahrens nach einem der Ansprüche 1 bis 8 mit mindestens einer Sensoranordnung, die eine Lichtmuster projizierende Projektionsvorrichtung und eine erste zweidimensional auflösende Aufzeichnungsvorrichtung zum Aufzeichnen eines mit den Lichtmustern beleuchteten Gegenstandes aufweist, mit mindestens einer zweiten Aufzeichnungsvorrichtung zum Aufzeichnen des mit den Lichtmustern beleuchteten Gegenstandes, mit einem den zu vermessenden Gegenstand aufnehmenden Meßtisch und einer Auswerteeinrichtung zur Bestimmung von Kenngrößen des Meßsystems und/oder von räumlichen Koordinaten des Gegenstandes, wobei die mindestens eine zweite Aufzeichnungsvorrichtung in Bezug auf den auf dem Meßtisch aufgenommenen Gegenstand ortsfest ist und die Sensoranordnung und der Gegenstand relativ zueinander beweglich sind.

10. Vorrichtung nach Anspruch 9, **dadurch gekennzeichnet, daß** die Projektionsvorrichtung und die erste Aufzeichnungsvorrichtung der Sensoranordnung fest miteinander verbunden sind.

11. Vorrichtung nach Anspruch 9, **dadurch gekennzeichnet, daß** die Projektionsvorrichtung und die erste Aufzeichnungsvorrichtung der Sensoranordnung unabhängig voneinander beweglich und/oder umsetzbar sind.

12. Vorrichtung nach einem der Ansprüche 9 bis 11, **dadurch gekennzeichnet, daß** die Sensoranordnung auf einer Dreheinheit angeordnet ist, in deren Mittelpunkt sich der Meßtisch befindet und die Sensoranordnung eine Drehbewegung in Bezug auf den Gegenstand durchführt.

13. Vorrichtung nach einem der Ansprüche 9 bis 11, **dadurch gekennzeichnet, daß** der Meßtisch drehbar ist und die mindestens eine zweite Aufzeichnungsvorrichtung starr mit dem drehbaren Meßtisch verbunden ist, während die Sensoranordnung ortsfest angeordnet ist.

14. Vorrichtung nach einem der Ansprüche 9 bis 11, **dadurch gekennzeichnet, daß** die Sensoranordnung an einer um den Meßtisch vorzugsweise um 360° drehbare Führungsbahn frei positionierbar befestigt ist.

15. Vorrichtung nach einem der Ansprüche 9 bis 14, **dadurch gekennzeichnet, daß** eine Mehrzahl von zweiten Aufzeichnungsvorrichtungen ortsfest zu dem Meßtisch vorgesehen sind.

16. Vorrichtung nach einem der Ansprüche 9 bis 15, **dadurch gekennzeichnet, daß** die zweite Aufzeichnungsvorrichtung mindestens drei Photodetektoren aufweist.

## Claims

1. Method for determining the spatial coordinates of an object, in which the object is illuminated with light patterns with a projection device from at least two directions, and the projected light patterns are recorded point by point on the object with a two-dimensional-resolution first recording device, wherein, for the respective recorded points of the surface of the object, phase values are determined and these are used to calculate geometrical parameters and spatial coordinates of the points, **characterised in that** the light patterns or portions thereof projected onto the object from the at least two directions are additionally recorded point by point by at least one second recording device, wherein the at least one second recording arrangement remains stationary in relation to the object to be measured, and **in that** from the points of the projected light patterns recorded with the second recording device are determined at least four phase measurement values from which the geometrical parameters of the projection device for the at least two directions of projection are calculated.

2. Method according to claim 1, **characterised in that**, after determination of the geometrical parameters of the projection device, the geometrical parameters of the first recording device are calculated using the geometrical parameters of the projection device with the respective projection direction and at least two phase measurement values which are determined from the light patterns recorded with the first recording device and projected from the respective direction.

3. Method according to claim 1 or 2, **characterised in that**, using the predetermined geometrical parameters of the projection device and of the first recording device and at least one phase measurement value which is determined from the light patterns recorded with the first recording device and projected from the respective direction, the three-dimensional coordinates of the respective points of the object are calculated.

4. Method according to any of claims 1 to 3, **characterised in that**, after projection of the light patterns from a first direction and recording of the view of the object from a first direction, the projection device and the first recording device are changed from a first position to a second position for projection from a second direction and recording of another view of the object from a second direction.

5. Method according to any of claims 1 to 4, **characterised in that**, for measurement of different views of the object, the projection device and the first recording device are changed together to different positions.

6. Method according to any of claims 1 to 5, **characterised in that** the geometrical parameters of the projection device and of the first recording device are orientation parameters.

7. Method according to claim 3, **characterised in that** two phase measurement values are used and each spatial coordinate is calculated twice and averaging is carried out.

8. Method according to any of claims 1 to 7, **characterised in that** the object is illuminated from each direction of projection in a first step with a line grid and/or Gray code sequences and in a second step with the line grid rotated through 90° relative to the direction of projection and/or the Gray code sequences rotated through 90°.

9. Device for carrying out the method according to any of claims 1 to 8, with at least one sensor arrangement comprising a projection device which projects light patterns and a first, two-dimensional-resolution recording device for recording an object illuminated with the light patterns, with at least one second recording device for recording the object illuminated with the light patterns, with a measuring table which holds the object to be measured, and with an evaluating device for determining parameters of the measuring system and/or spatial coordinates of the object, wherein the at least one second recording device is stationary in relation to the object held on the measuring table, and the sensor arrangement and the object are movable relative to each other.

10. Device according to claim 9, **characterised in that** the projection device and the first recording device of the sensor arrangement are rigidly connected to each other.

11. Device according to claim 9, **characterised in that** the projection device and the first recording device of the sensor arrangement are movable and/or changeable independently of each other.

12. Device according to any of claims 9 to 11, **characterised in that** the sensor arrangement is arranged on a rotating unit at the centre of which is located the measuring table, and the sensor arrangement performs a rotational movement in relation to the object.

13. Device according to any of claims 9 to 11, **characterised in that** the measuring table is rotatable and the at least one second recording device is rigidly connected to the rotatable measuring table, while the sensor arrangement is arranged stationarily.

14. Device according to any of claims 9 to 11, **characterised in that** the sensor arrangement is attached so as to be freely positionable to a guide track rotatable about the measuring table preferably through 360°.

15. Device according to any of claims 9 to 14, **characterised in that** a plurality of second recording devices are provided stationarily relative to the measuring table.

16. Device according to any of claims 9 to 15, **characterised in that** the second recording device comprises at least three photodetectors.

## Revendications

1. Procédé de détermination des coordonnées spatiales d'un objet, dans lequel l'objet est éclairé par un dispositif de projection à partir d'au moins deux directions pour former des motifs lumineux et le motif lumineux projeté est enregistré par points sur l'objet avec un premier dispositif d'enregistrement à résolution bidimensionnelle, dans lequel des valeurs de phase sont déterminées pour les points enregistrés respectifs de la surface de l'objet et sont utilisées pour calculer des caractéristiques géométriques et des coordonnées spatiales des points, **caractérisé en ce que** les motifs lumineux ou des parties de ceux-ci, projetés à partir d'au moins deux directions sur l'objet, sont en outre enregistrés par points par au moins un second dispositif d'enregistrement, dans lequel le au moins un second dispositif d'enregistrement reste fixe par rapport à l'objet à mesurer, et **en ce qu'**à partir des points des motifs lumineux projetés, enregistrés par le second dispositif d'enregistrement, on détermine au moins quatre valeurs de phase, à partir desquelles les caractéristiques géométriques du dispositif de projection sont calculés pour les au moins deux directions de la projection.

2. Procédé selon la revendication 1, **caractérisé en ce qu'**après la détermination des caractéristiques géométriques du dispositif de projection, les caractéristiques géométriques du premier dispositif d'enregistrement sont calculés en utilisant les caractéristiques géométriques du dispositif de projection dans la direction de projection respective et au moins deux valeurs de mesure de phase, qui sont déterminées à partir des motifs lumineux projetés de la première direction respective, enregistrés avec le premier dispositif d'enregistrement.

3. Procédé selon la revendication 1 ou 2, **caractérisé en ce que** l'on calcule les coordonnées tridimensionnelles des points respectifs de l'objet en utilisant les caractéristiques géométriques précédemment déterminées du dispositif de projection et du premier dispositif d'enregistrement et au moins une valeur de mesure de phase, qui est déterminée à partir des motifs lumineux projetés de la première direction respective, enregistrés par le premier dispositif d'enregistrement.

4. Procédé selon l'une quelconque des revendications 1 à 3, **caractérisé en ce qu'**après la projection des motifs lumineux à partir d'une première direction et l'enregistrement de la projection de l'objet à partir une première direction, le dispositif de projection et le premier dispositif d'enregistrement sont déplacés d'une première position à une seconde position pour la projection à partir d'une seconde direction et l'enregistrement d'une autre projection de l'objet à partir d'une seconde direction.

5. Procédé selon l'une quelconque des revendications 1 à 4, **caractérisé en ce que**, pour mesurer différentes projections de l'objet, le dispositif de projection et le premier dispositif d'enregistrement sont déplacés conjointement dans différentes positions.

6. Procédé selon l'une quelconque des revendications 1 à 5, **caractérisé en ce que** les caractéristiques géométriques du dispositif de projection et du premier dispositif d'enregistrement sont des paramètres d'orientation.

7. Procédé selon la revendication 3, **caractérisé en ce que** deux valeurs de mesure de phase sont employées, chaque coordonnée spatiale est calculée deux fois et une moyenne est établie.

8. Procédé selon l'une quelconque des revendications 1 à 7, **caractérisé en ce que** l'objet est éclairé à partir de chaque direction de projection, dans une première étape, avec un réseau de lignes et/ou des séquences de code de Gray et, dans une seconde étape, avec le réseau de lignes tourné de 90° par rapport à la direction de projection et/ou les séquences de code de Gray tournées de 90°

9. Dispositif pour mettre en oeuvre le procédé selon l'une quelconque des revendications 1 à 8, comprenant au moins un aménagement de capteur, qui présente un dispositif de projection projetant un motif lumineux et un premier dispositif d'enregistrement à résolution bidimensionnelle pour enregistrer un objet éclairé par les motifs lumineux, au moins un second dispositif d'enregistrement pour enregistrer l'objet éclairé par les motifs lumineux, une table de mesure recevant l'objet à mesurer et un dispositif d'exploitation pour déterminer des caractéristiques du système de mesure et/ou des coordonnées spatiales de l'objet, dans lequel le au moins un second dispositif d'enregistrement est fixe par rapport à l'objet présent sur la table de mesure et l'aménagement de capteur et l'objet sont mobiles l'un par rapport à l'autre.

10. Dispositif selon la revendication 9, **caractérisé en ce que** le dispositif de projection et le premier dispositif d'enregistrement de l'aménagement de capteur sont raccordés l'un à l'autre de manière fixe.

11. Dispositif selon la revendication 9, **caractérisé en ce que** le dispositif de projection et le premier dispositif d'enregistrement de l'aménagement de capteur sont mobiles et/ou déplaçables indépendamment l'un de l'autre.

12. Dispositif selon l'une quelconque des revendications 9 à 11, **caractérisé en ce que** l'aménagement de capteur est agencé sur une unité de rotation, au centre de laquelle se trouve la table de mesure et l'aménagement de capteur effectue un mouvement de rotation par rapport à l'objet.

13. Dispositif selon l'une quelconque des revendications 9 à 11, **caractérisé en ce que** la table de mesure est rotative et le au moins un second dispositif d'enregistrement est raccordé de manière rigide à la table de mesure rotative, tandis que l'aménagement de capteur est agencé fixe.

14. Dispositif selon l'une quelconque des revendications 9 à 11, **caractérisé en ce que** l'aménagement de capteur est fixé en positionnement libre sur une voie de guidage pouvant tourner autour de la table de mesure, de préférence de 360°

15. Dispositif selon l'une quelconque des revendications 9 à 14, **caractérisé en ce qu'**une pluralité de seconds dispositifs d'enregistrement est prévue de manière fixe par rapport à la table de mesure.

16. Dispositif selon l'une quelconque des revendications 9 à 15, **caractérisé en ce que** le second dispositif d'enregistrement présente au moins trois photodétecteurs.
